(19) Europäisches Patentamt
European Patent Office
Office européen des brevets

(11) **EP 3 038 192 B1**

(12) **EUROPEAN PATENT SPECIFICATION**

(45) Date of publication and mention
of the grant of the patent:
**27.09.2017 Bulletin 2017/39**

(51) Int Cl.:
*H01M 4/36* (2006.01)     *H01M 4/505* (2010.01)
*H01M 4/525* (2010.01)     *H01M 4/58* (2010.01)
*C23C 2/00* (2006.01)      *H01M 10/052* (2010.01)

(21) Application number: **15202271.1**

(22) Date of filing: **23.12.2015**

(54) **COMPOSITE CATHODE ACTIVE MATERIAL, PREPARATION METHOD THEREOF, CATHODE INCLUDING THE MATERIAL, AND LITHIUM BATTERY INCLUDING THE CATHODE**

AKTIVES VERBUNDSTOFFKATHODENMATERIAL, HERSTELLUNGSVERFAHREN DAFÜR, KATHODE MIT DEM MATERIAL UND LITHIUMBATTERIE MIT DER KATHODE

MATÉRIAU ACTIF DE CATHODE COMPOSITE, SON PROCÉDÉ DE PRÉPARATION, CATHODE CONTENANT LE MATÉRIAU, ET BATTERIE AU LITHIUM COMPRENANT LA CATHODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2014 KR 20140191132**

(43) Date of publication of application:
**29.06.2016 Bulletin 2016/26**

(73) Proprietors:
• **Samsung Electronics Co., Ltd.
Gyeonggi-do 16677 (KR)**
• **Samsung SDI Co., Ltd.
Yongin-si, Gyeonggi-do (KR)**
• **Industry Foundation of Chonnam National University
Gwangju 61186 (KR)**

(72) Inventors:
• **YOON, Jaegu
16678 Gyeonggi-do (KR)**
• **KIM, Donghan
44714 Ulsan (KR)**
• **PARK, Kwangjin
16678 Gyeonggi-do (KR)**
• **HONG, Sukgi
16678 Gyeonggi-do (KR)**
• **PARK, Jinhwan
16678 Gyeonggi-do (KR)**
• **KIM, Jaekook
61186 Gwangju (KR)**
• **KIM, Sungjin
61186 Gwangju (KR)**
• **GIM, Jihyeon
61186 Gwangju (KR)**

(74) Representative: **Scheuermann, Erik et al
Elkington and Fife LLP
Prospect House
8 Pembroke Road
Sevenoaks, Kent TN13 1XR (GB)**

(56) References cited:
**EP-A1- 2 741 353        WO-A1-2013/016426
WO-A2-2014/102531**

• **WU Y ET AL: "Surface Modification of High Capacity Layered Li[Li0.2Mn0.54Ni0.13Co0.13]O2 Cathodes by AIPO4", JOURNAL OF THE ELECTROCHEMICAL SOCIETY, ELECTROCHEMICAL SOCIETY , vol. 155, no. 9 1 January 2008 (2008-01-01), pages A635-A641, XP002667286, ISSN: 0013-4651, DOI: 10.1149/1.2948350 Retrieved from the Internet: URL:http://www.efrc.nano.utexas.edu/wp-con tent/uploads/2010/02/Manthiram-et-al_J-Ele ctrochem-2008.pdf [retrieved on 2008-07-11]**

EP 3 038 192 B1

**Description**

FIELD OF THE INVENTION

The present disclosure relates to a composite cathode active material, preparation methods thereof, a cathode including the composite cathode active material, and a lithium battery including the cathode.

BACKGROUND OF THE INVENTION

Demand for a cathode material having improved stability, long lifetime, high energy density, and high power characteristics has gradually increased as application of lithium secondary batteries has expanded from small electronic devices to electric vehicles and power storage devices. Thus there remains a need for an improved cathode material.

EP 2 741 353 A1 discloses a cathode active material for a lithium secondary battery, a method for preparing the same, and a lithium secondary battery including the same, and provides a cathode active material including: a lithium manganese-excess layered structure composite oxide represented by Formula Li $[Li_{x-z} (Ni_a Co_b Mn_c)_{1-x}]O_{2-y} F_y$ (here, $a + b + c = 1$, $0.05 \leq x \leq 0.33$, $0 \leq y \leq 0.08$, and $0 < z \leq 0.05$); a metal fluoride coating layer coated on a surface of the composite oxide; and a metal phosphate coating layer coated on the metal fluoride coating layer

SUMMARY OF THE INVENTION

Provided is a composite cathode active material.

Provided are methods of preparing the composite cathode active material.

Provided is a cathode including the cathode active material and a lithium battery having improved lifetime and voltage characteristics.

Additional aspects will be set forth in part in the description which follows and, in part, will be apparent from the description.

According to an aspect, a composite cathode active material includes: a lithium composite oxide; and a metal phosphate represented by Formula 1:

$$\text{Formula 1} \qquad M_xP_yO_z$$

wherein in Formula 1, M is vanadium, niobium, tantalum, or a combination thereof, $1 \leq y/x \leq 1.33$, and $4 \leq z/y \leq 5$.

According to an aspect, a method of preparing the composite cathode active material includes: mixing a metal phosphate represented by Formula 1 and a lithium composite oxide to prepare the composite cathode active material,

$$\text{Formula 1} \qquad M_xP_yO_z$$

wherein in Formula 1, M is vanadium, niobium, tantalum, or a combination thereof, $1 \leq y/x \leq 1.33$, and $4 \leq z/y \leq 5$.

According to an aspect, a method of preparing the composite cathode active material may include: preparing a salt solution including V, Nb, Ta, or a combination thereof by mixing a salt including vanadium (V), niobium (Nb), tantalum (Ta), or a combination thereof and a solvent; adding a phosphoric acid-based material and a lithium composite oxide to the salt solution to form a reaction product; and drying the reaction product.

According to an aspect, a cathode includes the composite cathode active material.

According to an aspect, a lithium battery includes the cathode, and an anode, and an electrolyte.

Also disclosed is a composite cathode active material including:

a lithium composite oxide represented by Formula 5:

$$\text{Formula 5} \qquad Li_{1+x1}M_{1-x1}O_2$$

wherein, in Formula 5, M is Ni, Co, and Mn, and $0.1 \leq x1 \leq 0.3$; and a metal phosphate represented by Formula 1,

$$\text{Formula 1} \qquad M_xPyO_z$$

wherein, in Formula 1, M is vanadium, $1 \leq y/x \leq 1.33$, and $4 \leq z/y \leq 5$.

BRIEF DESCRIPTION OF THE DRAWINGS

These and/or other aspects will become apparent and more readily appreciated from the following description of the exemplary embodiments, taken in conjunction with the accompanying drawings in which:

FIG. 1 is a schematic perspective view of an embodiment of a lithium battery;

FIG. 2 is a graph of capacity (milliampere-hours per gram, $mAh \cdot g^{-1}$) versus number of cycles which illustrates charge and discharge characteristics of lithium batteries prepared according to Manufacture Examples 1 to 4 and Comparative Manufacture Example 1;

FIG. 3 is a graph of voltage (volts, V) versus capacity (milliampere-hours per gram, $mAh \cdot g^{-1}$) which illustrates charge and discharge characteristics of lithium batteries prepared according to Manufacture Examples 1 to 4 and Comparative Manufacture Example of 1;

FIG. 4 is a graph of imaginary resistance (-Z", ohms·$cm^2$) versus real resistance (Z', ohms·$cm^2$), which illustrates the results of impedance analysis of coin cells after a $1^{st}$ cycle;

FIG. 5 is a graph of imaginary resistance (-Z", ohms·$cm^2$) versus real resistance (Z', ohms·$cm^2$), which illustrates the results of impedance analysis of coin cells after an $8^{th}$ cycle;

FIG. 6 is a graph of intensity (arbitrary units, a.u.) versus diffraction angle (degrees two-theta, $2\theta$) which illustrates the results of X-ray diffraction analysis on the vanadium phosphate obtained according to Example 4; and

FIGS. 7A to 7F are energy dispersive X-ray spectroscopy (EDX) mapping images obtained by transmission electron microscope analysis of a composite cathode active material that is prepared according to Example 4, in which FIGS. 7A to 7F are EDX mapping images of cobalt (Co), manganese (Mn), nickel (Ni), oxygen (O), vanadium (V), and phosphorus (P), respectively.

DETAILED DESCRIPTION OF THE EMBODIMENTS

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects. Expressions such as "at least one of," when preceding a list of elements, modify the entire list of elements and do not modify the individual elements of the list.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer, or section. Thus, "a first element," "component," "region," "layer," or "section," discussed below could be termed a second element, component, region, layer, or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within $\pm$ 30%, 20%, 10%, 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

A C rate means a current which will discharge a battery in one hour, e.g., a C rate for a battery having a discharge capacity of 1.6 ampere-hours would be 1.6 amperes.

Hereinafter, a composite cathode active material, a preparation method thereof, a cathode, and a lithium battery including the composite cathode active material are disclosed in more detail.

An over-lithiated layered oxide (OLO), as a high-capacity cathode active material, has received attention as a cathode material for advanced electric vehicles and power storage applications that would benefit from improved capacity. However, with respect to the OLO, high discharge capacity may be difficult to obtain due to a large irreversible capacity, which, while not wanting to be bound by theory, is believed to be caused by a phase transition during charge and discharge, and lifetime and voltage characteristics may be degraded due to the dissolution of manganese ions at high temperature and side reactions with an electrolyte. Thus, many attempts have been made to reduce the degradation of lifetime and voltage characteristics due to the phase transition of the OLO.

Provided is a composite cathode active material which includes a metal phosphate represented by Formula 1 and a lithium composite oxide.

$$\text{Formula 1} \qquad M_xP_yO_z$$

In Formula 1, M is vanadium (V), niobium (Nb), tantalum (Ta), or a combination thereof, $1 \leq y/x \leq 1.33$, and $4 \leq z/y \leq 5$.

With respect to the lithium composite oxide, high discharge capacity may be difficult to obtain due to a large irreversible capacity, which, while not wanting to be bound by theory, is understood to be caused by a phase transition during charge and discharge, and lifetime and voltage characteristics may be degraded due to the dissolution of the transition metal (e.g., manganese) contained in the lithium composite oxide at high temperature or a side reaction of the transition metal with an electrolyte.

However, the composite cathode active material according to the embodiment of the present disclosure may efficiently prevent the degradation of the lifetime and voltage characteristics due to the phase transition of the lithium composite oxide by including the metal phosphate represented by Formula 1 in addition to the lithium composite oxide. While not wanting to be bound by theory, it is understood that the metal phosphate represented by Formula 1 may form a composite structure with the lithium composite oxide or may have a structure in which the metal phosphate is included in a coating layer that is formed on at least portion of the lithium composite oxide.

In Formula 1, M can be vanadium, niobium, or tantalum. In an embodiment M is vanadium.

In Formula 1, x, for example, can be between 1 and 3, and y, for example, can between 1 and 4. Z can be between 4 and 20. In an embodiment, $1<x<3$, $1.2<x<2.8$, $1.4<x<2.6$, or $1.6<x<2.4$. In an embodiment, $1<y<4$, $1.2<y<3.8$, $1.4<y<3.6$, or $1.6<y<3.4$. Also, in an embodiment, $4<z<20$, $5<z<18$, $6<z<16$, or $7<z<14$. Also, $1.2 \leq y/x \leq 1.3$, $1.25 \leq y/x \leq 1.4$, or $1.2 \leq y/x \leq 1.6$, and $4.1 \leq z/y \leq 4.9$, $4.2 \leq z/y \leq 4.8$, or $4.3 \leq z/y \leq 4.7$

The metal phosphate represented by Formula 1 can be $VPO_4$, $V_3(PO_4)_4$, $TaPO_4$, $Ta_3(PO_4)_4$, $NbPO_4$, $Nb_3(PO_4)_4$, or a combination thereof. Use of $VPO_4$ is mentioned.

The lithium composite oxide, for example, may comprise a compound represented by Formula 2, a compound represented by Formula 3, a compound represented by Formula 4, or a combination thereof.

$$\text{Formula 2} \qquad LiM_2O_4$$

In Formula 2, M is nickel (Ni), cobalt (Co), manganese (Mn), or a combination thereof.

Formula 3        $Li_{1+x}M_{1-x}O_2$

In Formula 3, M is Ni, Co, Mn, titanium (Ti), V, iron (Fe), Nb, molybdenum (Mo), or a combination thereof, and $0 < x \leq 0.3$.

Formula 4        $Li_aNi_bCO_cMn_dM_eO_2$

In Formula 4, $1.1 \leq a < 1.5$, $0 < b < 1$, $0 \leq c < 1$, $0 < d < 1$, $0 \leq e < 1$, and $0 < b+c+d+e < 1$, and M is Ti, V, Fe, Nb, Mo, or a combination thereof.
In Formula 4, $1.15 \leq a < 1.5$, for example, $1.2 \leq a < 1.5$, and $0.495 < d < 1$, for example, $0.5 \leq d < 1$.
Examples of the compound represented by Formula 2 may include $LiMn_2O_4$.
The lithium composite oxide may be a compound represented by Formula 5.

Formula 5        $Li_{1+x1}M_{1-x1}O_2$

In Formula 5, M is Ni, Co, Mn, Ti, V, Fe, Nb, Mo, or a combination thereof, and $0.1 \leq x1 \leq 0.3$.
The metal phosphate represented by Formula 1 may be amorphous or crystalline, and may be polycrystalline. In an embodiment, the metal phosphate is amorphous. While not wanting to be bound by theory, it is understood that some defects may exist in the metal phosphate when the metal phosphate is amorphous. When such defects are present, the diffusion of lithium ions may be facilitated in comparison to when a crystalline metal phosphate without defects is used.
As noted above, it is believed that the phosphate compound may stabilize an electrode active material during charge and discharge at high voltage due to its high-voltage stability and may form a compound into which lithium is easily intercalated. Since the phosphate compound may suppress degradation of the electrode active material during repeated charge and discharge cycles by forming the compound in to which lithium is easily intercalated, wherein the phosphate compound may be stable at a high-voltage and may be disposed on the surface of the electrode active material, a battery having high-voltage, long lifetime, and excellent charge and discharge characteristics may be prepared.
The lithium composite oxide can comprise $Li_{1.167}Ni_{0.167}CO_{0.167}Mn_{0.499}O_2$, $Li_{1.167}Ni_{0.208}CO_{0.125}Mn_{0.5}O_2$, $Li_{1.2}Ni_{0.133}Co_{0.133}Mn_{0.534}O_2$, or a combination thereof, for example.
An amount of the metal phosphate represented by Formula 1 can be in a range of about 0.01 part by weight to about 40 parts by weight, for example, about 0.1 parts by weight to about 35 parts by weight, or about 5 parts by weight to about 30 parts by weight, based on 100 parts by weight of the composite cathode active material.
For example, the amount of the metal phosphate may be about 5 parts by weight, about 10 parts by weight, about 20 parts by weight, or about 30 parts by weight, based on 100 parts by weight of the composite cathode active material (e.g., 100 parts by weight of a total weight of the metal phosphate and the lithium composite oxide). When the amount of the metal phosphate represented by Formula 1 is within the above range, a lithium battery having improved voltage and lifetime characteristics may be prepared.
An average particle diameter of the lithium composite oxide and the composite cathode active material may be in a range of about 1 micrometer ($\mu$m) to about 15 $\mu$m, for example, about 3 $\mu$m to about 12 $\mu$m, or about 4 $\mu$m to about 10 $\mu$m. When the lithium composite oxide and the composite cathode active material respectively having the above average particle diameter range are used, a lithium battery having improved capacity and lifetime characteristics may be prepared.
The composite cathode active material may have a structure which has a lithium composite oxide and a coating layer including the phosphate represented by Formula 1 on at least a portion of a surface of the lithium composite oxide. The coating layer may be a continuous coating layer or a discontinuous coating layer, and the coating layer may be in the form of an island on the lithium composite oxide. A thickness of the coating layer is in a range of about 0.1 nanometer (nm) to about 1,000 nm, for example, about 0.1 nm to about 500 nm, or about 1 nm to about 100 nm. When the thickness of the coating layer is within the above range, a lithium battery having improved voltage and lifetime characteristics may be obtained.
Hereinafter, a method of preparing a composite cathode active material according to an embodiment of the present disclosure will be further described.
According to a first preparation method, a metal phosphate represented by the following Formula 1 is mixed with a lithium composite oxide to prepare a composite cathode active material.

Formula 1        $M_xP_yO_z$

In Formula 1, M is V, Nb, Ta, or a combination thereof, $1 \leq y/x \leq 1.33$, and $4 \leq z/y \leq 5$.

A milling process may be performed during the mixing. The milling may be performed at a condition of about 50 revolutions per minute (rpm) to about 300 rpm. A milling time may be in a range of about 1 hour to about 15 hours.

The metal phosphate represented by Formula 1 may be prepared by: preparing a salt solution by mixing an a salt comprising V, Nb, Ta, or a combination thereof and a solvent; adding a phosphoric acid-based material to the salt solution to form a reaction product; and drying the reaction product to form the metal phosphate.

The salt may be a sulfate, nitrate, acetate, or chloride including vanadium, niobium, tantalum, or a combination thereof. The salt, for example, may comprise vanadium acetate, vanadium nitrate, vanadium sulfate, vanadium chloride, niobium acetate, niobium nitrate, niobium sulfate, niobium chloride, tantalum nitrate, tantalum sulfate, tantalum chloride, tantalum acetate, or a combination thereof.

The solvent may comprise water, an alcohol, a ketone, a halogenated hydrocarbon, an ether, an ester, or a combination thereof.

The alcohol may have 1 to 16 carbons. For example, methanol, ethanol, n-propyl alcohol, isopropyl alcohol, n-butyl alcohol, sec-butyl alcohol, isobutyl alcohol, tert-butyl alcohol, 1-pentanol, 2-pentanol, 1-ethyl-1-propanol, 2-methyl-1-butanol, 3-methyl-1-butanol, 3-methyl-2-butanol, neopentyl alcohol, 1-hexanol, 2-methyl-1-pentanol, 4-methyl-2-pentanol, 2-ethyl-1-butanol, 1-heptanol, 2-heptanol, 3-heptanol, 1-octanol, 2-octanol, 2-ethyl-1-hexanol, 1-nonanol, 3,5,5-trimethyl-1-hexanol, 1-decanol, 1-undecanol, 1-dodecanol, allyl alcohol, propargyl alcohol, benzyl alcohol, cyclohexanol, 1-methylcyclohexanol, 2-methylcyclohexanol, 3-methylcyclohexanol, 4-methylcyclohexanol, $\alpha$-terpineol, 2,6-dimethyl-4-heptanol, nonylalcohol and tetradecylalcohol, may be mentioned. For example, methanol, ethanol or isopropylalcohol may, for example, be mentioned.

The ketone may have 3 to 9 carbons. For example, acetone, methyl ethyl ketone, 2-pentanone, 3-pentanone, 2-hexanone, methyl isobutyl ketone, 2-heptanone, 3-heptanone, 4-heptanone, diisobutyl ketone, mesityl oxide, 2-octanone, cyclohexanone, methylcyclohexanone, 2,4-pentanedione, 2,5-hexanedione, diacetone alcohol and acetophenone may, for example, be mentioned. For example, acetone or methyl ethyl ketone may, for example be mentioned.

The halogenated hydrocarbon may have 1 to 5 carbons. For example, dichloromethane, 1,1-dichloroethane, 1,2-dichloroethane, 1,1,2-trichloroethane, 1,1,1,2-tetrachloroethane, 1,1,2,2-tetrachloroethane, pentachloroethane, 1,1-dichloroethylene, 1,2-dichloroethylene, trichloroethylene, tetrachloroethylene, 1,2-dichloropropane, dichloropentafluoropropane, dichlorofluoroethane and decafluoropentane may be mentioned. For example, dichloromethane, trichloroethylene or tetrachloroethylene may, for example, be mentioned.

The ether may have 2 to 8 carbons. For example, diethyl ether, dipropyl ether, diisopropyl ether, dibutyl ether, ethyl vinyl ether, butyl vinyl ether, anisole, phenetole, methyl anisole, dioxane, furan, methyl furan and tetrahydrofuran may be mentioned. For example, diethyl ether, diisopropyl ether dioxane or tetrahydrofuran may, for example, be mentioned.

The ester may have 2 to 19 carbons. For example, methyl formate, ethyl formate, propyl formate, butyl formate, isobutyl formate, pentyl formate, methyl acetate, ethyl acetate, propyl acetate, isopropyl acetate, butyl acetate, isobutyl acetate, sec-butyl acetate, pentyl acetate, methoxybutyl acetate, sec-hexyl acetate, 2-ethylbutyl acetate, 2-ethylhexyl acetate, cyclohexyl acetate, benzyl acetate, methyl propionate, ethyl propionate, butyl propionate, methyl butyrate, ethyl butyrate, butyl butyrate, isobutyl isobutyrate, ethyl 2-hydroxy-2-methylpropionate, methyl benzoate, ethyl benzoate, propyl benzoate, butyl benzoate, benzyl benzoate, $\gamma$-butyrolactone, diethyl oxalate, dibutyl oxalate, dipentyl oxalate, diethyl malonate, dimethyl maleate, diethyl maleate, dibutyl maleate, dibutyl tartarate, tributyl citrate, dibutyl sebacate, dimethyl phthalate, diethyl phthalate and dibutyl phthalate may, for example, be mentioned. For example, methyl acetate or ethyl acetate may, for example, be mentioned.

Water, methanol, ethanol, isopropanol, and butanol may be used as the solvent. An amount of the solvent may be in a range of about 100 parts by weight to about 3,000 parts by weight, based on 100 parts by weight of the salt comprising vanadium, niobium, tantalum, or a combination thereof.

As the phosphoric acid-based material, phosphoric acid, polyphosphoric acid, phosphonic acid ($H_3PO_4$) orthophosphoric acid ($H_3PO_4$) pyrophosphoric acid ($H_4P_2O_7$) triphosphoric acid ($H_5P_3O_{10}$), metaphosphoric acid, ammonium hydrogen phosphate (($NH_4)_2HPO_4$), a derivative thereof, or a combination thereof may be used, and, for example, ammonium hydrogen phosphate (($NH_4)_2HPO_4$) or phosphoric acid may be used. Amounts of the phosphoric acid-based material and the M-containing salt may be stoichiometrically controlled to obtain the metal phosphate of Formula 1.

A reaction temperature of the salt solution of the salt comprising vanadium, niobium, tantalum, or a combination thereof and the phosphoric acid-based material may be in a range of about 25°C to about 80°C. The drying may be performed in a temperature range of about 80°C to about 300°C.

According to a second preparation method, a composite cathode active material may be prepared by the following process.

First, a salt solution is prepared by mixing a salt comprising V, Nb, Ta, or a combination thereof and a solvent.

Subsequently, a phosphoric acid-based material and a lithium composite oxide are added to the salt solution to form a reaction product.

The lithium composite oxide, for example, may be a compound represented by Formula 4.

Thereafter, the reaction product can be dried.

The reaction temperature and drying temperature of the salt solution comprising the salt comprising vanadium, niobium, tantalum, or a combination thereof and the phosphoric acid-based material can be the same as those of the first preparation method.

The metal phosphate represented by Formula 1 may include a primary particle, a secondary particle comprising an agglomerate of the primary particles, or a combination thereof.

An average particle diameter of the primary particles of the metal phosphate can be in a range of about 0.01 nm to about 1,000 nm, for example, about 1 nm to about 500 nm. An average particle diameter of the secondary particles of the metal phosphate is in a range of about 0.01 nm to about 10 $\mu$m, for example, about 1 nm to about 5 $\mu$m. The average particle diameters of the primary particles and the secondary particles of the metal phosphate may be obtained by scanning electron microscopy. When the average particle diameters of the primary particles and the secondary particles of the metal phosphate are respectively within the above ranges, a high energy density cathode active material having improved high-temperature stability as well as improved miscibility with the lithium composite oxide may be obtained.

A lithium battery according to another aspect may include a cathode; an electrolyte; and an anode, and the cathode may include the composite cathode active material.

The lithium battery has an average discharge voltage of 3.40V (vs. Li) or higher in state where the battery is charged at a 0.1C constant current rate to a voltage of about 4.8 V and then discharged at a 0.1C constant current rate until the voltage reached about 2 V. As such, the lithium battery has high discharge voltage.

The lithium battery has improved stability while having improved lifetime and voltage characteristics at room temperature and at a temperature ranging from about 40°C to about 80°C in a voltage range of about 2.8 V to about 4.5 V, for example, in a voltage range of about 4.3 V to about 4.5 V.

The lithium battery may be a lithium primary battery or a lithium secondary battery.

Hereinafter, a process of preparing a lithium battery using the composite cathode active material will be further described.

A cathode is prepared according to the following method.

A cathode active material composition is prepared in which a cathode active material, a binder, and a solvent are mixed.

A conductive agent may be further added to the cathode active material composition.

A cathode may be prepared by directly coating and drying the cathode active material composition on a metal current collector. Alternatively, the cathode active material composition can be cast on a separate support and a cathode may then be prepared by laminating a film detached from the support on the metal current collector.

The composite cathode active material may be used as the cathode active material. In addition to the composite cathode active material, the cathode active material may further include an additional cathode active material, wherein the additional cathode active material may be a commercially available cathode active material.

As the additional cathode active material, the additional cathode active material may include lithium cobalt oxide, lithium nickel cobalt manganese oxide, lithium nickel cobalt aluminum oxide, lithium iron phosphate, lithium manganese oxide, or a combination thereof. However, the additional cathode active material is not necessarily limited thereto and any suitable cathode active material may be used.

For example, a compound expressed as one of the following chemical formulas may be used as the additional cathode active material: $Li_aA_{1-b}B'_bD'_2$ (where $0.90 \le a \le 1.8$, $0 \le b \le 0.5$); $Li_aE_{1-b}B'_bO_{2-c}D'_c$ (where $0.90 \le a \le 1.8$, $0 \le b \le 0.5$, $0 \le c \le 0.05$); $LiE_{2-b}B'_bO_{4-c}D'_c$ (where $0 \le b \le 0.5$, $0 \le c \le 0.05$); $Li_aNi_{1-b-c}Co_bB'_cD'_\alpha$ (where $0.90 \le a \le 1.8$, $0 \le b \le 0.5$, $0 \le c \le 0.05$, $0 < \alpha \le 2$ ); $Li_aNi_{1-b-c}Co_bB'_cO_{2-\alpha}F'_\alpha$ (where $0.90 \le a \le 1.8$, $0 \le b \le 0.5$, $0 \le c \le 0.05$, $0 < \alpha < 2$ ); $Li_aNi_{1-b-c}Co_bB'_cO_{2-\alpha}F'_2$ (where $0.90 \le a \le 1.8$, $0 \le b \le 0.5$, $0 \le c \le 0.05$, $0 < \alpha < 2$ ); $Li_aNi_{1-b-c}Mn_bB'_cD'_\alpha$ (where $0.90 \le a \le 1.8$, $0 \le b \le 0.5$, $0 \le c \le 0.05$, $0 < \alpha \le 2$ ); $Li_aNi_{1-b-c}Mn_bB'_cO_{2-\alpha}F'_\alpha$ (where $0.90 \le a \le 1.8$, $0 \le b \le 0.5$, $0 \le c \le 0.05$, $0 < \alpha < 2$ ); $Li_aNi_{1-b-c}Mn_bB'_cO_{2-\alpha}F'_2$ (where $0.90 \le a \le 1.8$, $0 \le b \le 0.5$, $0 \le c \le 0.05$, $0 < \alpha < 2$ ); $Li_aNi_bE_cG_dO_2$ (where $0.90 \le a \le 1.8$, $0 \le b \le 0.9$, $0 \le c \le 0.5$, $0.001 \le d \le 0.1$); $Li_aNi_bCo_cMn_dGeO_2$ (where $0.90 \le a \le 1.8$, $0 \le b \le 0.9$, $0 \le c \le 0.5$, $0 \le d \le 0.5$, $0.001 \le e \le 0.1$); $Li_aNiG_bO_2$ (where $0.90 \le a \le 1.8$, $0.001 \le b \le 0.1$); $Li_aCoG_bO_2$ (where $0.90 \le a \le 1.8$, $0.001 \le b \le 0.1$); $Li_aMnG_bO_2$ (where $0.90 \le a \le 1.8$, $0.001 \le b \le 0.1$); $Li_aMnG_bO_4$ (where $0.90 \le a \le 1.8$, $0.001 \le b \le 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$.

In the above chemical formulas, A is Ni, Co, Mn, or a combination thereof; B' is aluminium (Al), Ni, Co, Mn, chromium (Cr), Fe, magnesium (Mg), strontium (Sr), V, rare earth elements, or a combination thereof; D' is oxygen (O), fluorine (F), sulfur (S), phosphorus (P), or a combination thereof; E is Co, Mn, or a combination thereof; F' is F, S, P, or a combination thereof; G is Al, Cr, Mn, Fe, Mg, lanthanum (La), cerium (Ce), Sr, V, or a combination thereof; Q is Ti, Mo, Mn, or a combination thereof; I' is Cr, V, Fe, scandium (Sc), yttrium (Y), or a combination thereof; and J is V, Cr, Mn, Co, Ni, copper (Cu), or a combination thereof.

For example, compounds represented by the following Formulas 6 to 8 may be used as the cathode active material.

Formula 6 $\quad$ $Li_aNi_bCo_cMn_dO_2$

In Formula 6, $0.90 \leq a < 1.5$, $0 < b \leq 0.9$, $0 < c \leq 0.5$, and $0 < d \leq 0.9$.

Formula 7 $\quad$ $Li_2MnO_3$

Formula 8 $\quad$ $LiMO_2$

In Formula 8, M is Mn, Fe, Co, or Ni.

Examples of the conductive agent may be carbon black, graphite, which may be in the form of particles having a size of 1 $\mu$m to 100 $\mu$m, natural graphite, artificial graphite, acetylene black, Ketjen black, carbon fibers; carbon nanotubes; metal powders or metal fibers or metal tubes such as copper, nickel, aluminium, or silver; conductive polymers such as a polyphenylene derivative, or a combination thereof. However, the conductive agent is not limited thereto and any suitable conductive agent may be used.

Examples of the binder may be a vinylidene fluoride/hexafluoropropylene copolymer, polyvinylidene fluoride, polyimide, polyethylene, polyester, polyacrylonitrile, poly(methyl methacrylate), polytetrafluoroethylene (PTFE), a carboxymethyl cellulose-styrene butadiene rubber (CMC/SBR) copolymer, a styrene butadiene rubber-based polymer, or mixtures thereof.

Examples of the solvent may be N-methylpyrrolidone, acetone, or water. However, the solvent is not necessarily limited thereto and any suitable solvent may be used.

Contents of the composite cathode active material, conductive agent, binder, and solvent are amounts used in a lithium battery and can be determined by one of skill in the art without undue experimentation. One or more of the conductive agent, binder, and solvent may be omitted according to applications and configurations of lithium batteries if desired.

The anode may be prepared in almost the same manner as the cathode except that an anode active material is used instead of the cathode active material in the above-described process of preparing a cathode.

A carbon-based material, silicon, silicon oxide, a silicon-based alloy, a silicon-carbon-based material composite, tin, a tin-based alloy, a tin-carbon composite, metal oxide, or a combination thereof may be used as the anode active material.

The carbon-based material may be crystalline carbon, amorphous carbon, or a mixture thereof. The crystalline carbon may be graphite such as plate, flake, spherical, or fibrous natural graphite or artificial graphite, and the amorphous carbon may be soft carbon (e.g., low-temperature fired carbon) or hard carbon, mesophase pitch carbonization product, fired coke, graphene, carbon black, fullerene soot, carbon nanotubes, or carbon fibers. However, the carbon-based material is not necessarily limited thereto and any suitable carbon-based material may be used.

Any one selected from silicon (Si), $SiO_x$ ($0 < x < 2$, for example, $0.5 < x < 1.5$), tin (Sn), $SnO_2$, a silicon-containing metal alloy, and a mixture thereof may be used as the anode active material. At least one selected from Al, Sn, silver (Ag), Fe, bismuth (Bi), Mg, zinc (Zn), indium (In), germanium (Ge), lead (Pb), and Ti may be used as a metal which may form the silicon alloy.

The anode active material may include metal/metalloid alloyable with lithium, an alloy thereof, or an oxide thereof. Examples of the metal/metalloid alloyable with lithium, the alloy thereof, or the oxide thereof may be Si, Sn, Al, Ge, Pb, Bi, antimony (Sb), an Si-Y' alloy (where Y' is alkaline metal, alkaline earth metal, a Group 13-16 element, transition metal, a rare earth element, or a combined element thereof, and is not Si), an Sn-Y" alloy (where Y" is alkaline metal, alkaline earth metal, a Group 13-16 element, transition metal, a rare earth element, or a combined element thereof, and is not Sn), $MnO_x$ ($0 < x \leq 2$), etc. Examples of the element Y' and Y' may independently be Mg, calcium (Ca), Sr, barium (Ba), radium (Ra), Sc, Y, Ti, zirconium (Zr), hafnium (Hf), rutherfordium (Rf), V, Nb, Ta, dubnium (Db), Cr, Mo, tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, Ag, gold (Au), Zn, cadmium (Cd), B, Al, Ga, Sn, In, Ge, P, arsenic (As), Sb, Bi, S, selenium (Se), tellurium (Te), polonium (Po), and combinations thereof. For example, an oxide of the metal/metalloid alloyable with lithium may be lithium titanate, vanadium oxide, lithium vanadium oxide, $SnO_2$, or $SiO_x$ ($0 < x < 2$).

For example, the anode active material may include a Group 13 element, a Group 14 element, a Group 15 element of the Periodic Table of Elements, or a combination thereof.

For example, the anode active material may include Si, Ge, Sn, or a combination thereof.

The contents of the anode active material, conductive agent, binder, and solvent are amounts used in a lithium battery and can be determined by one of skill in the art without undue experimentation.

A separator is disposed between the cathode and the anode, and a thin insulating film having high ion permeability as well as suitable mechanical strength is used as the separator.

A pore diameter of the separator can be in a range of about 0.01 $\mu$m to about 10 $\mu$m, and a thickness thereof can be in a range of about 5 $\mu$m to about 20 $\mu$m. For example, an olefin-based polymer such as polypropylene; and a sheet or nonwoven fabric formed of glass fibers or polyethylene may be used as the separator. In a case where a solid polymer electrolyte is used as the electrolyte, the solid polymer electrolyte may also act as a separator.

In the separator, examples of the olefin-based polymer may be polyethylene, polypropylene, polyvinylidene fluoride, or a multilayer of two or more layers thereof, and a mixed multilayer, such as a polyethylene/polypropylene double-layered separator, a polyethylene/polypropylene/polyethylene triple-layered separator, or a polypropylene/polyethylene/polypropylene triple-layered separator, may be used.

The lithium salt-containing non-aqueous electrolyte comprises a non-aqueous electrolyte and a lithium salt.

A non-aqueous electrolyte solution, an organic solid electrolyte, and an inorganic solid electrolyte can be used as the non-aqueous electrolyte.

The non-aqueous electrolyte solution includes an organic solvent. Any suitable organic solvent may be used. Examples of the organic solvent may be propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, N,N-dimethylacetamide, N,N-dimethylsulfoxide, dioxane, 1,2-dimethoxyethane, sulfolane, dichloroethane, chlorobenzene, nitrobenzene, diethyleneglycol, dimethylether, and mixtures thereof.

Examples of the organic solid electrolyte may be a polyethylene derivative, a polyethylene oxide derivative, a polypropylene oxide derivative, a phosphate ester polymer, polyester sulfide, polyvinyl alcohol, polyvinylidene fluoride, and a polymer including an ionic dissociation group.

Examples of the inorganic solid electrolyte may be $Li_3N$, LiI, $Li_5NI_2$, $Li_3N$-LiI-LiOH, $Li_2SiS_3$, $Li_4SiO_4$, $Li_4SiO_4$-LiI-LiOH, or$Li_3PO_4$-$Li_2S$-$SiS_2$.

Examples of the lithium salt, as a material suitable for being dissolved in the non-aqueous electrolyte, may be $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO_2)$ $(C_yF_{2y+1}SO_2)$ (where x and y are natural numbers), LiCl, LiI, and mixtures thereof. In order to improve charge and discharge characteristics and flame retardancy, pyridine, triethyl phosphite, triethanolamine, cyclic ester, ethylene diamine, n-glyme, hexamethylphosphoramide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may, for example, be added to the non-aqueous electrolyte. In some cases, in order to provide incombustibility, a halogen-containing solvent, such as carbon tetrachloride and ethylene trifluoride, may be further included.

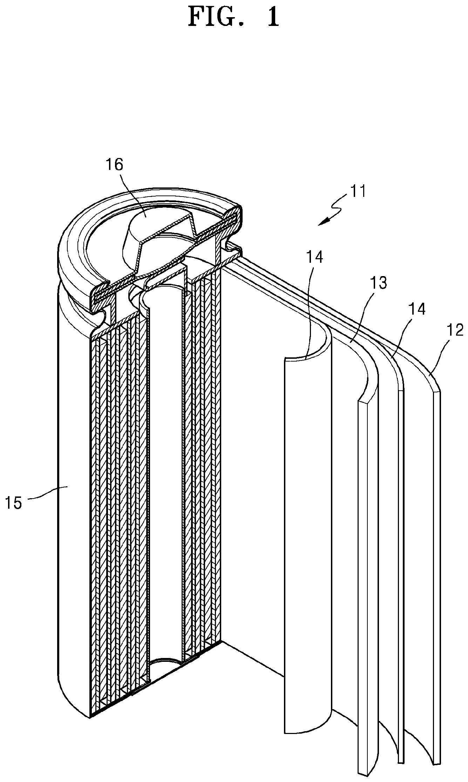

As shown in FIG. 1, a lithium battery 11 includes a cathode 13, an anode 12, and a separator 14. The cathode 13, anode 12, and separator 14 are wound and folded to be contained in a battery case 15. Subsequently, an organic electrolyte solution is injected into the battery case 15, and the lithium battery 11 is completed by being sealed with a cap assembly 16. The battery case 15 may be a cylindrical, rectangular, or thin-film type battery case. For example, the lithium battery 11 may be a thin-film type battery. The lithium battery 11 may be a lithium-ion battery.

A separator is disposed between the cathode 13 and the anode 12 such that a battery structure may be formed. The battery structure can be stacked in a bi-cell structure, and then impregnated in an organic electrolyte solution. A lithium-ion polymer battery can be completed when a product thus obtained is contained in a pouch and sealed.

Also, the plurality of battery structures can be stacked to form a battery pack, and the battery pack may be used in all devices demanding high capacity and high power. For example, the battery pack may be used in a notebook, a smartphone, or an electric vehicle (EV).

Since the cathode, which includes a cathode active material including the composite cathode active material according to the embodiment of the present disclosure, and the lithium battery according to an embodiment of the present disclosure have improved lifetime and voltage characteristics, the cathode and the lithium battery are suitable for an EV. For example, the cathode and the lithium battery are suitable for a hybrid vehicle such as a plug-in hybrid electric vehicle (PHEV).

Hereinafter, the present disclosure is described in more detail according to examples below. However, the scope of the present disclosure is not limited thereto.

EXAMPLES

Comparative Example 1: Preparation of Overlithiated Layered Oxide (OLO)

About 2 molar (M) of a nickel sulfate aqueous solution ($NiSO_4\cdot6(H_2O)$, Aldrich), about 2 M of a cobalt sulfate aqueous solution ($CoSO_4\cdot7(H_2O)$, Aldrich), and about 2 M of a manganese sulfate aqueous solution ($MnSO_4\cdot H_2O$, Aldrich) were respectively prepared. Thereafter, a mixed solution was prepared by mixing the nickel sulfate aqueous solution, the cobalt sulfate aqueous solution, and the manganese sulfate aqueous solution to obtain a molar ratio of nickel, cobalt, and manganese, which were included in the nickel sulfate aqueous solution, the cobalt sulfate aqueous solution, and the manganese sulfate aqueous solution, of about 0.133:0.133:0.534. The mixed solution and about 2 M of a NaOH aqueous solution were added together to about 4 liters (L) of about 0.2 M of a $NH_4OH$ solution at a rate of about 3 mL/min to perform a reaction for about 10 hours while maintaining a pH value of about 11, and a precipitate thus obtained was then filtered. The precipitate was washed with water and dried, and then mixed with $Li_2CO_3$ (Aldrich) to obtain a molar ratio of Li:Ni:Co:Mn of about 1.2:0.133:0.133:0.534. Then, a lithium composite oxide ($Li_{1.2}Ni_{0.133}Co_{0.133}Mn_{0.534}O_2$) was obtained by heat treating the mixture at about 950°C for about 5 hours in an atmospheric pressure.

Example 1: Preparation of Composite Cathode Active Material

About 100 milliliters (mL) of distilled water was added to about 5 grams (g) of vanadium acetate and about 150 mL of ethanol was then added thereto. A solution, in which about 2.54 g of ammonium hydrogen phosphate ($(NH_4)_2HPO_4$) was dissolved in about 100 mL of distilled water, was added to the mixture and then stirred for about 6 hours.

An amorphous vanadium phosphate ($VPO_4$) was obtained by filtering the reaction product and vacuum drying the filtered reaction product at about 250°C.

A composite cathode active material was obtained by mixing the amorphous vanadium phosphate ($VPO_4$) obtained according to the above process and the over-lithiated layered oxide (OLO) ($Li_{1.2}Ni_{1.133}Co_{1.133}Mn_{0.534}O_2$) obtained according to Comparative Example 1 at a weight ratio of about 30:70.

Examples 2 and 3: Preparation of Composite Cathode Active Materials

Composite cathode active materials were obtained in the same manner as in Example 1 except that vanadium phosphate ($VPO_4$) and the OLO were mixed at a weight ratio of about 20:80 and about 10:90, respectively.

Example 4: Preparation of Cathode Active Material

About 1.19 g of vanadium acetate was dissolved in about 50 ml of distilled water and then mixed with about 75 mL of methanol. A solution, in which about 10 g of OLO ($Li_{1.2}Ni_{0.133}Co_{0.133}Mn_{0.534}O_2$) and about 0.6 g of ammonium hydrogen phosphate ($(NH_4)_2HPO_4$) were dissolved in about 50 mL of distilled water, was added to the resultant product and stirred for about 1 hour.

The resultant product was filtered and vacuum dried at about 250°C to obtain a composite cathode active material. The composite cathode active material obtained according to Example 4 had a structure in which a coating layer including vanadium phosphate ($VPO_4$) was formed on the surface of the OLO, and an amount of the vanadium phosphate was about 5 parts by weight based on 100 parts by weight of the composite cathode active material.

Example 5: Preparation of Cathode Active Material

Composite cathode active materials were obtained in the same manner as in Example 1 except that niobium acetate was used instead of vanadium phosphate.

Example 6: Preparation of Cathode Active Material

Composite cathode active materials were obtained in the same manner as in Example 1 except that tantalum acetate was used instead of vanadium phosphate.

Manufacture Example 1: Coin Cell Preparation

A 2032 coin cell was prepared by using the composite cathode active material, which was prepared according to Example 1, as follows:

Bubbles were removed from a mixture of about 90 g of the cathode active material obtained according to Example 1, about 5 g of polyvinylidene fluoride, about 105 g of N-methylpyrrolidone as a solvent, and about 5 g of carbon black as a conductive agent using a mixer to prepare a uniformly dispersed slurry for forming a cathode active material layer.

The slurry thus prepared was coated on an aluminum foil using a doctor blade to be formed in a thin electrode plate shape. Then, the coated aluminium foil was dried at about 135°C for about 3 hours or more and then subjected to rolling and vacuum drying to prepare a cathode.

A 2032 type coin cell was prepared by using the cathode and a lithium metal as a counter electrode. A separator formed of a porous polyethylene (PE) film (thickness: about 16 $\mu$m) was disposed between the cathode and the lithium metal counter electrode, and an electrolyte was injected thereinto to prepare a 2032 type coin cell.

In this case, a solution, in which about 1.3 M LiPF$_6$ was dissolved in a solvent that was prepared by mixing ethylene carbonate (EC) and ethylmethyl carbonate (EMC) at a volume ratio of about 3:7, was used as the electrolyte.

Manufacture Examples 2 to 4: Coin Cell Preparation

Coin cells were prepared in the same manner as in Manufacture Example 1 except that the composite cathode active materials prepared according to Examples 2 to 4 were respectively used instead of the composite cathode active material prepared according to Example 1.

Manufacture Examples 5 and 6: Coin Cell Preparation

Coin cells were prepared in the same manner as in Manufacture Example 1 except that the composite cathode active materials prepared according to Examples 5 and 6 were respectively used instead of the composite cathode active material prepared according to Example 1.

Comparative Manufacture Example 1: Coin Cell Preparation

A coin cell was prepared in the same manner as in Manufacture Example 1 except that the cathode active material prepared according to Comparative Example 1 was used instead of the composite cathode active material prepared according to Example 1.

Evaluation Example 1: Lifetime Characteristics

Charge and discharge cycles were performed on the coin cells prepared according to Manufacture Examples 1 to 4 and Comparative Manufacture Example 1 at 25°C.

The coin cells were respectively charge at a 0.1C constant current rate to a voltage of about 4.8 V and then discharged at a 0.1C constant current rate until the voltage reached about 2 V.

The above-described cycle was repeated 20 times.

A capacity retention rate is expressed by Equation 1 below. An initial discharge capacity is a discharge capacity at a first cycle.

Equation 1

Capacity retention rate [%] = [discharge capacity in a 20$^{th}$ cycle / maximum discharge capacity] × 100

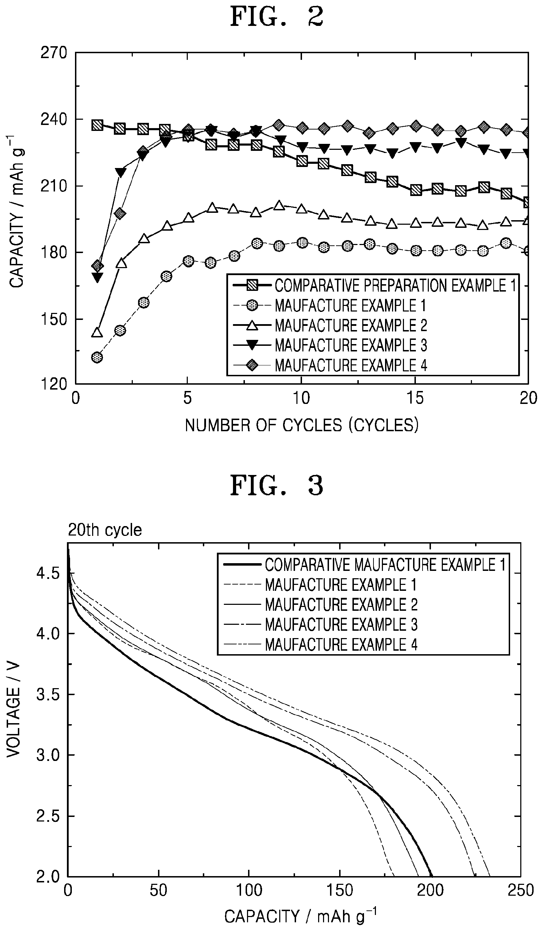

Charge and discharge characteristics of the lithium batteries prepared according to Manufacture Examples 1 to 4 and Comparative Manufacture Example 1 were evaluated, and the results thereof are presented in Table 1 and FIG. 2 below.

Table 1

| Category | Initial charge capacity at 0.1 C | Maximum discharge capacity at 0.1 C | Discharge capacity in the 20$^{th}$ cycle | Capacity Retention Rate (%) |
|---|---|---|---|---|
| Manufacture Example 1 | 133 | 184 | 180 | 97.83 |
| Manufacture Example 2 | 143 | 200 | 194 | 97 |
| Manufacture Example 3 | 169 | 235 | 225 | 95.74 |
| Manufacture Example 4 | 174 | 237 | 233 | 98.31 |

(continued)

| Category | Initial charge capacity at 0.1 C | Maximum discharge capacity at 0.1 C | Discharge capacity in the 20th cycle | Capacity Retention Rate (%) |
|---|---|---|---|---|
| Comparative Manufacture Example 1 | 237 | 237 | 202 | 85.23 |

Referring to Table 1 and FIG. 2, it may be understood that the coin cells prepared according to Examples 1 to 4 had improved capacity retention rates in comparison to the coin cell of Comparative Manufacture Example 1.

Charge and discharge cycles were performed on the coin cells prepared according to Manufacture Examples 5 and 6 at 25°C in the same manner as in Manufacture Example 1. Lifetime characteristics of the coin cell prepared according to Manufacture Examples 5 and 6 were measured in the same manner as in Manufacture Example 1.

The coin cells prepared according to Manufacture Examples 5 and 6 has lifetime characteristics similar to those of the coin-half cell prepared in Manufacturing Example 1.

Evaluation Example 2: Average Discharge Voltage

Charge and discharge cycles were performed on the coin cells prepared according to Manufacture Examples 1 to 4 and Comparative Manufacture Example 1 at 25°C. The coin cells were respectively charge at a 0.1C constant current rate to a voltage of about 4.8 V and then discharged at a 0.1C constant current rate until the voltage reached about 2 V. The above-described cycle was repeated 20 times.

Charge and discharge characteristics of the lithium batteries prepared according to Manufacture Examples 1 to 4 and Comparative Manufacture Example 1 were evaluated, and the results thereof are presented in Table 2 and FIG. 3 below.

Table 2

| Category | Average discharge voltage (V) | | |
|---|---|---|---|
| | 1st cycle | 10th cycle | 20th cycle |
| Manufacture Example 1 | 3.48 | 3.5 | 3.44 |
| Manufacture Example 2 | 3.51 | 3.46 | 3.41 |
| Manufacture Example 3 | 3.51 | 3.46 | 3.44 |
| Manufacture Example 4 | 3.33 | 3.49 | 3.46 |
| Comparative Manufacture Example 1 | 3.50 | 3.37 | 3.25 |

As illustrated in Table 2 and FIG. 3, the coin cells prepared according to Examples 1 to 4 had improved average discharge voltages at the 20th cycle in comparison to the coin cell of Comparative Manufacture Example 1.

Evaluation Example 3: Impedance Measurement

First and second charge and discharge, and charge and discharge cycles were performed on the coin cells prepared according to Manufacture Example 4 and Comparative Manufacture Example 1 at 25°C.

The coin cells were respectively charged at a 0.1C constant current rate to a voltage of about 4.8 V and then discharged at a 0.1C constant current rate until the voltage reached about 2 V. Impedances before and after the charge and discharge were measured using an impedance analyzer. Impedances before the charge and discharge and impedances after the cycle were respectively measured by an alternating current (AC) impedance method.

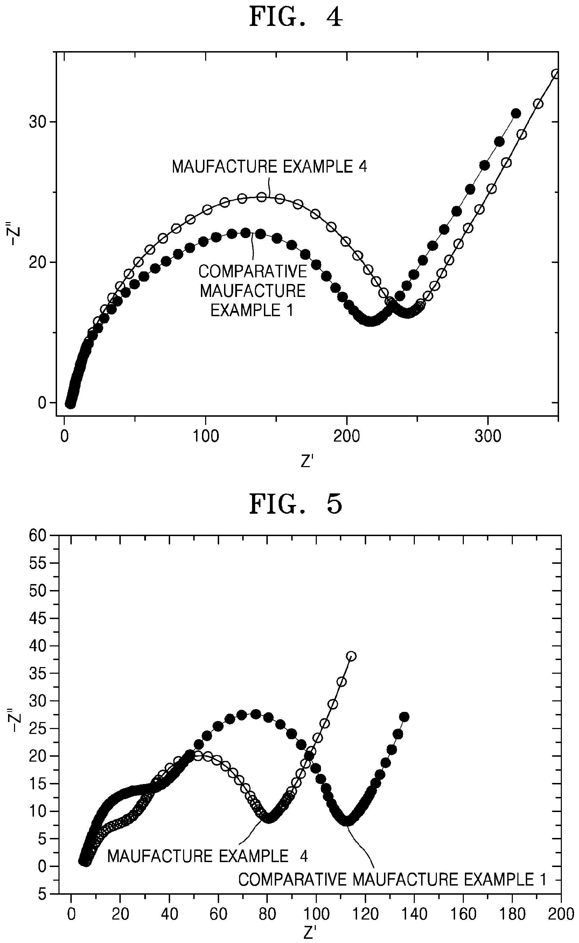

The measurement results are illustrated in FIGS. 4 and 5. FIG. 4 illustrates the impedance measurement results of the coin cells after the 1St cycle, and FIG. 5 illustrates the impedance measurement results of the coin cells after an 8th cycle.

Referring to FIGS. 4 and 5, it may be understood that interfacial resistance between the cathode and the electrolyte of the coin cell of Manufacture Example 4 was significantly decreased due to excellent interfacial stability between the cathode and the electrolyte as well as excellent stability of the cathode active material in comparison to that of the coin cell prepared according to Comparative Manufacture Example 1.

Evaluation Example 4: Inductively Coupled Plasma Spectrometer (ICP) Analysis

ICP analysis was performed on the amorphous vanadium phosphate which was obtained according to Example 5. The results of the ICP analysis are presented in Table 3 below.

Table 3

| Element | Content (ppm) | Content (at%) | Molar ratio |
|---|---|---|---|
| Vanadium (V) | 251 | 4.927172078 | 1 |
| Phosphorus (P) | 185 | 6.295602764 | 1.277731458 |

In Table 3, "ppm" refers to parts per million, and "at%" refers to atomic percent. From Table 3, it may be understood that a molar ratio of vanadium to phosphorus was about 1:1.3 and the composition of the amorphous vanadium phosphate was $(VO)_3P_4O_{13}$ (i.e., $V_3(PO_4)_4$).

Evaluation Example 5: X-ray Diffraction (XRD) Analysis

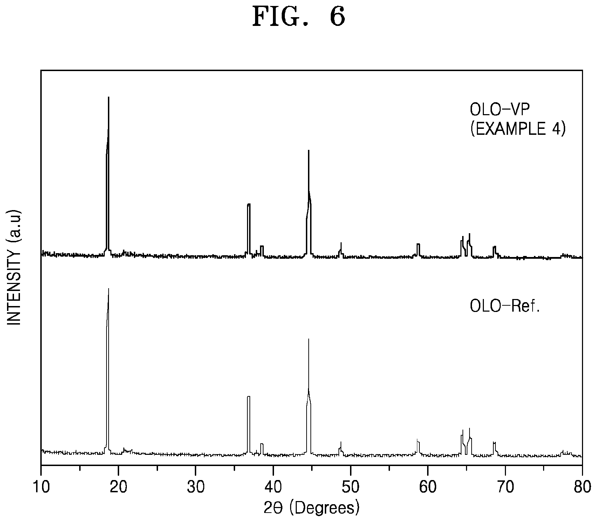

X-ray diffraction analysis of the vanadium phosphate obtained according to Example 4 was conducted using a Rigaku RINT2200HF+ diffractometer with Cu $K_\alpha$ radiation (1.540598 Å). The results thereof are presented in FIG. 6. In FIG. 6, the results of X-ray diffraction analysis on the OLO $Li_{1.2}Ni_{0.133}Co_{0.133}Mn_{0.534}O_2$ (denoted as "OLO-Ref' in FIG. 6) are also presented for comparison.

Referring to FIG. 6, it may be confirmed that the OLO treated with vanadium phosphate of Example 4 exhibited the same XRD results as the untreated OLO.

Evaluation Example 6: Transmission electron microscopy-energy dispersive X-ray analysis (TEM-EDAX) Mapping

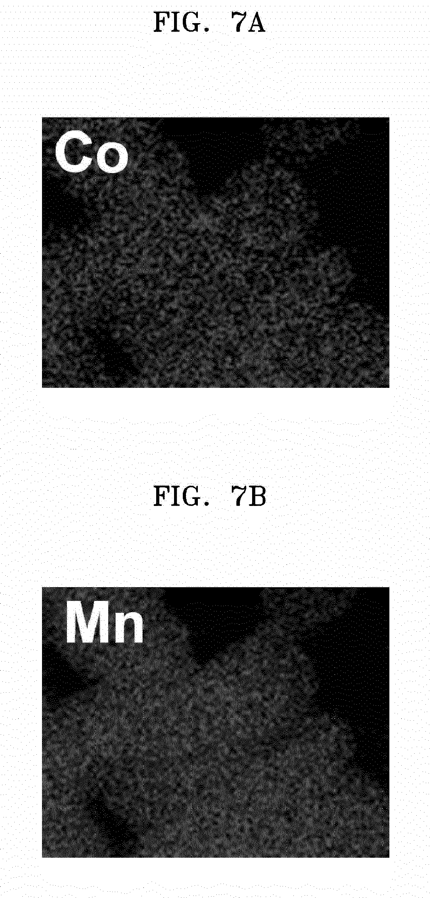

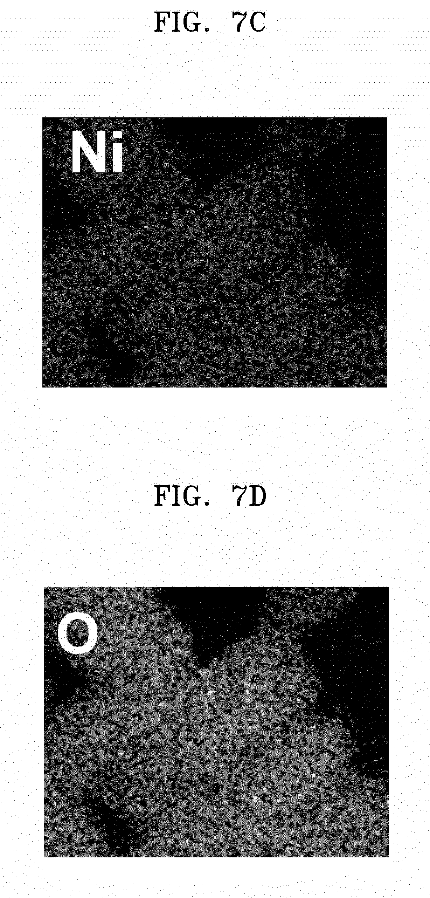

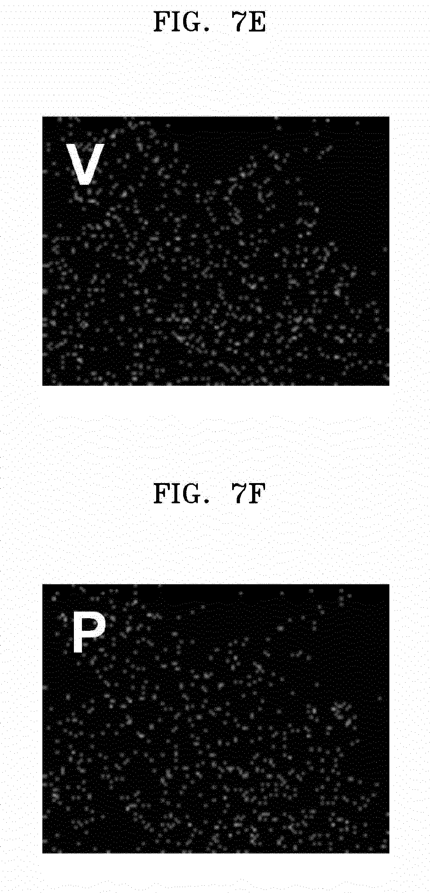

Energy dispersive X-ray spectroscopy (EDX) mapping images were obtained by performing transmission electron microscope analysis of the composite cathode active material that was prepared according to Example 4. Herein, Philips FEI Titan 80-300 was used for the TEM-EDAX analysis. The results of the TEM-EDX mapping are presented in FIGS. 7A to 7F. FIGS. 7A to 7F are EDX mapping images of cobalt (Co), manganese (Mn), nickel (Ni), oxygen (O), vanadium (V), and phosphorus (P), respectively.

Referring to FIGS. 7A to 7F, it may be confirmed that vanadium and phosphorus are uniformly distributed in the composite cathode active material.

As described above, according to the one or more of the above exemplary embodiments, a lithium battery having improved lifetime and voltage characteristics may be prepared by using a composite cathode active material according to an aspect of the present disclosure.

It should be understood that the exemplary embodiments described herein should be considered in a descriptive sense only and not for purposes of limitation. Descriptions of features or aspects within each exemplary embodiment should be considered as available for other similar features or aspects in other exemplary embodiments.

While one or more exemplary embodiments have been described with reference to the figures, it will be understood by those of ordinary skill in the art that various changes in form and details may be made therein without departing from the scope as defined by the following claims.

**Claims**

1. A composite cathode active material comprising:

a lithium composite oxide; and
a metal phosphate represented by Formula 1,

Formula 1  $M_xP_yO_z$

wherein, in Formula 1, M is vanadium, niobium, tantalum, or a combination thereof, $1 \leq y/x \leq 1.33$, and $4 \leq z/y \leq 5$.

2. The composite cathode active material of claim 1, wherein, in Formula 1, x is between 1 and 3, y is between 1 and 4, and z is between 4 and 20.

3. The composite cathode active material of claim 1 or 2, wherein the metal phosphate represented by Formula 1 is $VPO_4$, $V_3(PO_4)_4$, $TaPO_4$, $Ta_3(PO_4)_4$, $NbPO_4$, or $Nb_3(PO_4)_4$.

4. The composite cathode active material of any of claims 1-3, wherein the lithium composite oxide is a compound represented by Formulas 2 to 4, or a combination thereof:

$$Formula\ 2 \qquad LiM_2O_4$$

wherein, in Formula 2, M is nickel, manganese, cobalt, or a combination thereof,

$$Formula\ 3 \qquad Li_{1+x}M_{1-x}O_2$$

wherein, in Formula 3, M is Ni, Co, Mn, Ti, V, Fe, Nb, Mo, or a combination thereof, preferably wherein M is at least one of Ni, Co, and Mn, and $0<x\leq0.3$, preferably wherein $0.1\leq x\leq0.3$ , and

$$Formula\ 4 \qquad Li_aNi_bCO_cMn_dM_eO_2$$

wherein, in Formula 4, $1.1\leq a<1.5$, $0<b<1$, $0<c<1$, $0<d<1$, $0\leq e<1$, and $0<b+c+d+e<1$, and M is Ti, V, Fe, Nb, Mo, or a combination thereof.

5. The composite cathode active material of any of claims 1-4, wherein the metal phosphate represented by Formula 1 is amorphous.

6. The composite cathode active material of any of claims 1-5, wherein the composite cathode active material comprises the lithium composite oxide and a coating layer including the metal phosphate represented by Formula 1 on at least a portion of a surface of the lithium composite oxide.

7. A method of preparing the composite cathode active material of any of claims 1-6, the method comprising:

mixing a metal phosphate represented by Formula 1 and a lithium composite oxide to prepare the composite cathode active material:

$$Formula\ 1 \qquad M_xP_yO_z$$

wherein, in Formula 1, M is vanadium, niobium, tantalum, or a combination thereof, $1\leq y/x\leq1.33$, and $4\leq z/y\leq5$.

8. The method of claim 7, wherein the metal phosphate represented by Formula 1 is prepared by:

preparing a salt solution comprising vanadium, niobium, tantalum, or a combination thereof by mixing a salt comprising vanadium, niobium, tantalum, or a combination thereof and a solvent;
adding a phosphoric acid-based material to the salt solution to form a reaction product; and
drying the reaction product to prepare the metal phosphate represented by Formula 1.

9. The method of claim 8, wherein the reaction product of the salt solution comprising vanadium, niobium, tantalum, or a combination thereof and the phosphoric acid-based material is formed in a temperature range of 25°C to 80°C.

10. The method of claim 8 or 9, wherein the phosphoric acid-based material comprises phosphoric acid, polyphosphoric acid, phosphonic acid, orthophosphoric acid, pyrophosphoric acid, triphosphoric acid, metaphosphoric acid, ammonium hydrogen phosphate, a derivative thereof, or a combination thereof.

11. The method of any of claims 7-10, wherein an amount of the metal phosphate represented by Formula 1 is in a range of 0.01 part by weight to 40 parts by weight, based on 100 parts by weight of a total weight of the metal phosphate represented by Formula 1 and the lithium composite oxide.

12. The method of any of claims 8-11, wherein:

adding a phosphoric acid-based material to the salt solution to form a reaction product comprises adding a phosphoric acid-based material and the lithium composite oxide to the salt solution to form the reaction product;

and

drying the reaction product to prepare the metal phosphate represented by Formula 1 comprises drying the reaction product to prepare the composite cathode active material.

13. A cathode comprising the composite cathode active material of any of claims 1-6.

14. A lithium battery comprising the cathode of claim 13, an anode, and an electrolyte.

**Patentansprüche**

1. Aktives Kathodenverbundmaterial, umfassend:

   ein Lithium-Verbundoxid; und
   ein Metallphosphat dargestellt durch Formel 1,

   Formel 1           $M_xP_yO_z$

   wobei, in Formel 1, M Vanadium, Niobium, Tantal oder eine Kombination davon ist, $1 \leq y/x \leq 1,33$, und $4 \leq z/y \leq 5$.

2. Aktives Kathodenverbundmaterial nach Anspruch 1, wobei, in Formel 1, x zwischen 1 und 3 ist, y zwischen 1 und 4 ist und z zwischen 4 und 20 ist.

3. Aktives Kathodenverbundmaterial nach Anspruch 1 oder 2, wobei das Metallphosphat dargestellt durch Formel 1 $VPO_4$, $V_3(PO_4)_4$, $TaPO_4$, $Ta_3(PO_4)_4$, $NbPO_4$ oder $Nb_3(PO_4)_4$ ist.

4. Aktives Kathodenverbundmaterial nach einem der Ansprüche 1-3, wobei das Lithium-Verbundoxid eine Verbindung dargestellt durch die Formeln 2 bis 4 oder eine Kombination davon ist:

   Formel 2           $LiM_2O_4$

   wobei, in Formel 2, M Nickel, Mangan, Kobalt oder eine Kombination davon ist,

   Formel 3           $Li_{1+x}M_{1-x}O_2$

   wobei, in Formel 3, M Ni, Co, Mn, Ti, V, Fe, Nb, Mo oder eine Kombination davon ist, vorzugsweise wobei M mindestens eines aus Ni, Co und Mn, und $0 < x \leq 0,3$ ist, vorzugsweise wobei $0,1 \leq x \leq 0,3$ ist, und

   Formel 4           $Li_aNi_bCo_cMn_dM_eO_2$

   wobei, in Formel 4, $1,1 \leq a < 1,5$, $0 < b < 1$, $0 \leq c < 1$, $0 < d < 1$, $0 \leq e < 1$ und $0 < b+c+d+e < 1$, und M Ti, V, Fe, Nb, Mo oder eine Kombination davon ist.

5. Aktives Kathodenverbundmaterial nach einem der Ansprüche 1-4, wobei das Metallphosphat dargestellt durch Formel 1 amorph ist.

6. Aktives Kathodenverbundmaterial nach einem der Ansprüche 1-5, wobei das aktive Kathodenverbundmaterial das Lithium-Verbundoxid und eine Beschichtungsschicht enthaltend das Metallphosphat dargestellt durch Formel 1 an mindestens einem Abschnitt einer Fläche des Lithium-Verbundoxids umfasst.

7. Verfahren zum Zubereiten des aktiven Kathodenverbundmaterials nach einem der Ansprüche 1-6, das Verfahren umfassend:

   Mischen eines Metallphosphats dargestellt durch Formel 1 und eines Lithium-Verbundoxids zum Zubereiten des aktiven Kathodenverbundmaterials:

   Formel 1           $M_xP_yO_z$

wobei, in Formel 1, M Vanadium, Niobium, Tantal oder eine Kombination davon ist, 1≤y/x≤1,33, und 4≤z/y≤5.

8. Verfahren nach Anspruch 7, wobei das Metallphosphat dargestellt durch Formel 1 durch Folgendes zubereitet wird:

Zubereiten einer Salzlösung umfassend Vanadium, Niobium, Tantal oder eine Kombination davon durch Mischen eines Salzes umfassend Vanadium, Niobium, Tantal oder eine Kombination davon und eines Lösungsmittels;
Hinzufügen eines phosphorsäurebasierten Materials zu der Salzlösung, um ein Reaktionsprodukt zu bilden; und
Trocknen des Reaktionsprodukts zum Zubereiten des Metallphosphats dargestellt durch Formel 1.

9. Verfahren nach Anspruch 8, wobei das Reaktionsprodukt der Salzlösung umfassend Vanadium, Niobium, Tantal oder eine Kombination davon und das phosphorsäurebasierte Material in einem Temperaturbereich von 25 °C bis 80 °C gebildet wird.

10. Verfahren nach Anspruch 8 oder 9, wobei das phosphorsäurebasierte Material Phosphorsäure, Polyphosphorsäure, Phosphonsäure, Orthophosphorsäure, Pyrophosphorsäure, Triphosphorsäure, Metaphosphorsäure, Ammoniumwasserstoffphosphat, ein Derivat davon oder eine Kombination davon umfasst.

11. Verfahren nach einem der Ansprüche 7-10, wobei eine Menge des Metallphosphats dargestellt durch Formel 1 in einem Bereich von 0,01 Gewichtanteilen bis 40 Gewichtanteilen ist, beruhend auf 100 Gewichtanteilen eines Gesamtgewichts des Metallphosphats dargestellt durch Formel 1 und des Lithium-Verbundoxids.

12. Verfahren nach einem der Ansprüche 8-11, wobei:

ein Hinzufügen eines phosphorsäurebasierten Materials zu der Salzlösung zum Bilden eines Reaktionsprodukts ein Hinzufügen eines phosphorsäurebasierten Materials und des Lithium-Verbundoxids zu der Salzlösung umfasst, um das Reaktionsprodukt zu bilden; und
ein Trocknen des Reaktionsprodukts zum Zubereiten des Metallphosphats dargestellt durch Formel 1 ein Trocknen des Reaktionsprodukts zum Zubereiten des aktiven Kathodenverbundmaterials umfasst.

13. Kathode umfassend das aktive Kathodenverbundmaterial nach einem der Ansprüche 1-6.

14. Lithiumbatterie umfassend die Kathode nach Anspruch 13, eine Anode und ein Elektrolyt.

**Revendications**

1. Matériau actif de cathode composite comprenant :

un oxyde composite de lithium ; et
un phosphate métallique représenté par la Formule 1,

$$\text{Formule 1} \qquad M_xP_yO_z$$

où, dans la Formule 1, M est : vanadium, niobium, tantale, ou une combinaison de ceux-ci, $1 \leq y/x \leq 1{,}33$, et $4 \leq z/y \leq 5$.

2. Matériau actif de cathode composite selon la revendication 1, dans lequel, dans la Formule 1, x est entre 1 et 3, y est entre 1 et 4, et z est entre 4 et 20.

3. Matériau actif de cathode composite selon la revendication 1 ou 2, dans lequel le phosphate métallique représenté par la Formule 1 est $VPO_4$, $V_3(PO_4)_4$, $TaPO_4$, $Ta_3(PO_4)_4$, $NbPO_4$, ou $Nb_3(PO_4)_4$.

4. Matériau actif de cathode composite selon l'une quelconque des revendications 1-3, dans lequel l'oxyde composite de lithium est un composé représenté par les Formules 2 à 4, ou une combinaison de ceux-ci :

$$\text{Formule 2} \qquad LiM_2O_4$$

où, dans la Formule 2, M est : nickel, manganèse, cobalt ou une combinaison de ceux-ci,

Formule 3 $\quad\quad\quad Li_{1+x}M_{1-x}O_2$

où, dans la Formule 3, M est Ni, Co, Mn, Ti, V, Fe, Nb, Mo, ou une combinaison de ceux-ci, M étant de préférence au moins l'un de Ni, Co et Mn, et $0<x\leq0,3$, de préférence où $0,1\leq x\leq0,3$, et

Formule 4 $\quad\quad\quad Li_aNi_bCo_cMn_dM_eO_2$

où, dans la Formule 4, $1,1\leq a\leq1,5$, $0<b<1$, $0\leq c\leq1$, $0<d<1$, $0\leq e<1$, et $0<b+c+d+e<1$, et M est Ti, V, Fe, Nb, Mo, ou une combinaison de ceux-ci.

5. Matériau actif de cathode composite selon l'une quelconque des revendications 1-4, dans lequel le phosphate métallique représenté par la Formule 1 est amorphe.

6. Matériau actif de cathode composite selon l'une quelconque des revendications 1-5, le matériau actif de cathode composite comprenant l'oxyde composite de lithium et une couche de revêtement comprenant le phosphate métallique représenté par la Formule 1 sur au moins une partie d'une surface de l'oxyde composite de lithium.

7. Procédé de préparation du matériau actif de cathode composite selon l'une quelconque des revendications 1-6, le procédé comprenant :

le mélange d'un phosphate métallique représenté par la Formule 1 et d'un oxyde composite de lithium pour préparer le matériau actif de cathode composite :

Formule 1 $\quad\quad\quad M_xP_yO_z$

où, dans la Formule 1, M est : vanadium, niobium, tantale, ou une combinaison de ceux-ci, $1\leq y/x\leq1,33$, et $4\leq z/y\leq55$.

8. Procédé selon la revendication 7, dans lequel le phosphate métallique représenté par la Formule 1 est préparé par :

préparation d'un soluté salin comprenant : vanadium, niobium, tantale, ou une combinaison de ceux-ci par mélange d'un sel comprenant : vanadium, niobium, tantale, ou une combinaison de ceux-ci et d'un solvant ; adjonction d'un matériau à base d'acide phosphorique au soluté salin pour former un produit de réaction ; et séchage du produit de réaction pour préparer le phosphate métallique représenté par la Formule 1.

9. Procédé selon la revendication 8, dans lequel le produit de réaction du soluté salin comprenant : vanadium, niobium, tantale, ou une combinaison de ceux-ci et le matériau à base d'acide phosphorique est formé dans une plage de température de 25°C à 80°C.

10. Procédé selon la revendication 8 ou 9, dans lequel le matériau à base d'acide phosphorique comprend : acide phosphorique, acide polyphosphorique, acide phosphonique, acide orthophosphorique, acide pyrophosphorique, acide triphosphorique, acide métaphosphorique, hydrogénophosphate d'ammonium, un dérivé de ceux-ci ou une combinaison de ceux-ci.

11. Procédé selon l'une quelconque des revendications 7-10, dans lequel une quantité du phosphate métallique représenté par la Formule 1 est dans une gamme de 0,01 part en poids à 40 parts en poids, sur la base de 100 parts en poids d'un poids total du phosphate métallique représenté par la Formule 1 et de l'oxyde composite de lithium.

12. Procédé selon l'une quelconque des revendications 8-11, dans lequel :

l'adjonction d'un matériau à base d'acide phosphorique au soluté salin pour former un produit de réaction comprend l'adjonction d'un matériau à base d'acide phosphorique et de l'oxyde composite de lithium au soluté salin pour former le produit de réaction ; et
le séchage du produit de réaction pour préparer le phosphate métallique représenté par la Formule 1 comprend le séchage du produit de réaction pour préparer le matériau actif de cathode composite.

**13.** Cathode comprenant le matériau actif de cathode composite selon l'une quelconque des revendications 1-6.

**14.** Batterie au lithium comprenant la cathode selon la revendication 13, une anode et un électrolyte.

# FIG. 1

# FIG. 2

Legend:
- COMPARATIVE PREPARATION EXAMPLE 1
- MAUFACTURE EXAMPLE 1
- MAUFACTURE EXAMPLE 2
- MAUFACTURE EXAMPLE 3
- MAUFACTURE EXAMPLE 4

x-axis: NUMBER OF CYCLES (CYCLES)
y-axis: CAPACITY / mAh g$^{-1}$

# FIG. 3

20th cycle

Legend:
- COMPARATIVE MAUFACTURE EXAMPLE 1
- MAUFACTURE EXAMPLE 1
- MAUFACTURE EXAMPLE 2
- MAUFACTURE EXAMPLE 3
- MAUFACTURE EXAMPLE 4

x-axis: CAPACITY / mAh g$^{-1}$
y-axis: VOLTAGE / V

# FIG. 4

# FIG. 5

# FIG. 6

FIG. 7A

FIG. 7B

FIG. 7C

FIG. 7D

FIG. 7E

FIG. 7F

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2741353 A1